# EUROPÄISCHE PATENTSCHRIFT

(11) **EP 1 428 084 B1**
(45) Veröffentlichungstag und Bekanntmachung des Hinweises auf die Patenterteilung: **11.09.2013**
(21) Anmeldenummer: 02774343.4
(22) Anmeldetag: 12.09.2002
(51) Int. Cl.: H04J 3/06, G05B 19/042

(54) **VERFAHREN UND VORRICHTUNG ZUR ZEITBESTIMMUNG IN EINEM BUSSYSTEM UND BUSSYSTEM**
METHOD AND DEVICE FOR DETERMINING TIME IN A BUS SYSTEM AND CORRESPONDING BUS SYSTEM
PROCEDE ET DISPOSITIF DE DETERMINATION DE TEMPS DANS UN SYSTEME DE BUS, ET SYSTEME DE BUS CORRESPONDANT

(30) Priorität: 13.09.2001 DE 10145218
(43) Veröffentlichungstag der Anmeldung: 16.06.2004
(73) Patentinhaber: ROBERT BOSCH GMBH, 70442 Stuttgart (DE)
(72) Erfinder: HARTWICH, Florian, 72762 Reutlingen (DE)
(86) Internationale Anmeldenummer: PCT/DE2002/003397
(87) Internationale Veröffentlichungsnummer: WO 2003/026201

(56) Entgegenhaltungen:
- EP-A- 1 115 219
- US-A- 5 751 721
- US-A- 5 887 029
- US-A- 5 896 552
- US-A- 5 944 840
- ATMEL WIRELESS & MC, T89C51CC01, ENHANCED 8-BIT MCU WITH CAN CONTROLLER AND FLASH, [Online] 10. Oktober 2000 (2000-10-10), XP002242355 Gefunden im Internet: <URL:http://www.changnam.com/files/newprod uct/T89C51CC01.pdf>

## Beschreibung

### Stand der Technik

Die Erfindung betrifft ein Verfahren und eine Vorrichtung zur Zeitbestimmung in einem Bussystem mit wenigstens zwei Teilnehmern, welche über eine Kommunikationsverbindung in Verbindung stehen sowie ein entsprechendes Bussystem gemäß den unabhängigen Ansprüchen.

Die Vernetzung von Steuergeräten, Sensoren und Aktuatorik mit Hilfe eines Kommunikationssystems hat in den letzten Jahren beim Bau von modernen Kraftfahrzeugen oder auch im Maschinenbau, insbesondere im Werkzeugmaschinenbereich oder in der Automatisierung drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über einen Bus statt. Der Kommunikationsverkehr auf dem Bus, Zugriffs- und Empfangsmechanismen sowie Fehlerbehandlung werden über ein Protokoll geregelt. Busspezifische Elemente von Steuergeräten, Sensoren und Aktuatorik, im Weiteren Teilnehmer genannt, in Verbindung mit der Kommunikationsverbindung werden im Weiteren als Bussystem bezeichnet.

Als Protokoll im Kfz-Bereich etabliert ist der CAN (Controller Area Network). Dieses ist ein ereignisgesteuertes Protokoll, d. h. Protokollaktivitäten wie das Senden einer Nachricht werden durch Ereignisse iniziiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Voraussetzung dafür ist, dass jeder Nachricht eine eindeutige Priorität zugewiesen ist. Das CAN-Protokoll ist sehr flexibel; ein Hinzufügen weiterer Knoten und Nachrichten ist damit problemlos möglich, so lange es noch freie Prioritäten (message identifier) gibt. Die Sammlung aller im Netzwerk zu sendenden Nachrichten mit Prioritäten und deren Senderknoten sowie möglicherweise Empfangsknoten werden in einer Liste, der sogenannten Kommunikationsmatrix abgelegt.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen, in denen ein Sender exklusives Senderecht hat. Das Protokoll ist vergleichsweise unflexibel; ein Hinzufügen von neuen Knoten ist nur dann möglich, wenn zuvor schon die entsprechenden Zeitbereiche freigelassen wurden. Dieser Umstand erzwingt, die Nachrichtenreihenfolge schon vor Inbetriebnahme festzusetzen. Es wird also ein Fahrplan erstellt, der den Anforderungen der Nachrichten bezüglich Wiederholrate, Redundanz, deadlines usw. genügen muss. Man spricht vom sogenannten "bus schedule". Die Positionierung der Nachrichten innerhalb der Sendeperioden muss auf die Applikationen abgestimmt werden, die die Nachrichteninhalte produzieren, um die Latenzen zwischen Applikation und Sendezeitpunkt minimal zu halten. Wenn diese Abstimmung nicht erfolgt, würde der Vorteil der zeitgesteuerten Übermittlung (minimale Latenz-Jitter beim Senden der Nachricht am Bus) zerstört. Es werden so hohe Anforderungen an die Planungstools gestellt.

Der in den Patentanmeldungen DE 100 00 302 A1, DE 100 00 303 A1, DE 100 00 304 A1 und DE 100 00 305 A1 gezeigte Lösungsansatz des zeitgesteuerten CAN, dem so genannten TTCAN (Time Triggered Controller Area Network) genügt den oben skizzierten Forderungen nach zeitgesteuerter Kommunikation sowie den Forderungen nach einem gewissen Maß an Flexibilität. TTCAN erfüllt dies durch den Aufbau der Kommunikationsrunde (basic cycle) in so genannte exklusive Zeitfenster für periodische Nachrichten bestimmter Kommunikationsteilnehmer und in so genannte arbitrierende Zeitfenster fiir spontane Nachrichten mehrerer Kommunikationsteilnehmer.

Im Weiteren wird von einem TTCAN-Netzwerk als Bussystem ausgegangen, wobei dies nicht als einschränkend bezüglich des späteren Gegenstands der Erfindung zu verstehen ist. Vielmehr ist der Gegenstand der später erläuterten Erfindung auch bei weiteren, vergleichbaren Bussystemen einsetzbar.

Im Rahmen eines TTCAN-Netzwerks zeigt die DE 100 00 305 A1 ein Verfahren und eine Vorrichtung zum Austausch von Daten in Nachrichten zwischen wenigstens zwei Busteilnehmern, welche mittels eines Bussystems verbunden sind, wobei die die Daten enthaltenen Nachrichten wie auch in der DE 100 00 303 A 1 durch die Teilnehmer über das Bussystem übertragen werden und jede Nachricht eine, die enthaltenen Daten charakterisierende Kennung enthält, wobei jeder Teilnehmer anhand der Kennung entscheidet, ob er die Nachricht empfängt. Dabei werden die Nachrichten durch einen ersten Teilnehmer zeitlich derart gesteuert, dass der erste

Teilnehmer wiederholt eine Referenznachricht in wenigstens einem vorgegebenen zeitlichen Abstand über den Bus überträgt und der zeitliche Abstand in Zeitfenster vorgebbarer Länge unterteilt wird, wobei die Nachrichten in den Zeitfenstern übertragen werden.

Die ATMEL-Schrift XP-002242355 "Enhanced 8-bit MCU with CAN controller and Flash" zeigt mit dem T89C51CC01 1 einen 8-bit Microcontroller für CAN-Anwendungen, welcher ebenfalls eine zeitgesteuerte Kommunikation unterstützt. Darin ist die Möglichkeit vorgesehen, eine CAN-Botschaft mit einem Zeitstempel abhängig von einem lokalen 16-bit Zeitgeber zu versehen.

Dokument US-A-5 887 029 zeigt eine Reaktion eines Moduls auf ein Triggerereignis, in dem dieses Modul seine Uhr ausliest und einen Wert einer koordinierten Systemzeit in eine Nachricht ablegt und einem Prozessormodul 26 übertragt.

Angesichts dieses Standes der Technik soll dabei nun ein Verfahren und eine Vorrichtung angegeben werden, mit deren Hilfe eine Zeitbestimmung im Bussystem mit wenigstens zwei Teilnehmern ermöglicht wird, wobei die Zeitbestimmung ohne Belastung der verarbeitenden Einheit, insbesondere eines Prozessors des Teilnehmers durchgeführt werden soll.

### Vorteile der Erfindung

Dazu schlägt die Erfindung ein Verfahren und eine Vorrichtung zur Zeitbestimmung in einem Bussystem mit wenigstens zwei Teilnehmern, welche über eine Kommunikationsverbindung in Verbindung stehen, derart vor, dass wenigstens ein Teilnehmer eine vorgebbare Basiszeit dann in wenigstens einen Speicher ablegt, wenn ein Ereignis auf der Kommunikationsverbindung auftritt, dessen Auftrittszeit bestimmt werden soll.

Vorteilhafter Weise handelt es sich bei dem genannten Bussystem um ein time triggered controller area network, ein so genanntes TTCAN-System. Dabei löst das Ereignis, dessen Auftrittszeitpunkt bestimmt wird, in einer ersten Ausführungsform einen Signalwechsel an einer Schnittstelle eines Teilnehmers zur Kommunikationsverbindung, vorzugsweise des wenigstens einen die Zeit bestimmenden Teilnehmers aus, wobei bei Auftreten dieses Signalwechsels die vorgebbare Basiszeit bzw. Zeitbasis zu diesem Zeitpunkt im Speicher abgelegt wird. In einer weiteren vorteilhaften Ausgestaltung hat das Ereignis, dessen Auftrittszeitpunkt bestimmt wird, einen vorgebbaren Signalpegel an einer Schnittstelle zur Kommunikationsverbindung des wenigstens einen die Zeit bestimmenden Teilnehmers zur Folge, wobei dann bei Auftreten des vorgebbaren Signalpegels die vorgebbare Basiszeit im Speicher abgelegt wird. Dabei können-vorteilhafter Weise als Basiszeit oder Zeitbasis verschiedene Zeiten des Netzwerks, insbesondere des TTCAN-Netzwerks verwendet werden, wie beispielsweise die local time, die global time oder die cycle time.

Bei der local time besitzt jeder Teilnehmer eine lokale Zeit, wobei die Basiszeit jeweils der lokalen Zeit des die Zeit bestimmenden Teilnehmers entspricht. Wird ein Teilnehmer im Netzwerk bzw. Bussystem als Zeitmaster bestimmt, so wird die lokale Zeit dieses Teilnehmers als globale Zeit oder global time für das gesamte Bussystem eingesetzt, wobei diese globale Zeit vorteilhafter Weise ebenfalls als Basiszeit für alle Teilnehmer bezüglich der Zeitbestimmung verwendet werden kann. Wie im Stand der Technik genannt, werden die Nachrichten über die Kommunikationsverbindung derart übertragen, dass eine Referenznachricht eines Teilnehmers in einem vorgebbaren zeitlichen Abstand übertragen, wobei der vorgebbare zeitliche Abstand der Zykluszeit im Netzwerk bzw. Bussystem entspricht, wobei der zeitliche Abstand in Zeitfenster vorgebbare Länge unterteilt wird, in denen die Nachrichten übertragen werden und als weitere Möglichkeit diese Zykluszeit oder cycle time als Basiszeit zur Zeitbestimmung eingesetzt wird.

In einer weiteren vorteilhaften Ausgestaltung können nacheinander mehrere Basiszeiten in einen oder mehrere Speicher abgelegt werden, so dass bei Zuordnung jeder Basiszeit zu einem Ereignis mehrere Zeiten von Ereignissen oder mehrere Zeiten eines Ereignisses nacheinander bestimmbar sind.

In einer weiteren vorteilhaften Ausgestaltung werden gleichzeitig mehrere Basiszeiten in mehrere Speicher abgelegt, so dass mehrere Zeiten von Ereignissen gleichzeitig bestimmt werden können.

In einer speziellen Ausgestaltung bewirkt wenigstens ein Ereignis ein Eingangssignal bei dem wenigstens einen die Zeit bestimmenden Teilnehmer, wobei das Ablegen der Basiszeit im Speicher dann durch ein oder mehrere insbesondere unterschiedliche Eingangssignale ausgelöst werden kann.

Vorteilhafter Weise kann die Basiszeit bzw. Zeitbasis zur Zeitbestimmung für das Bussystem entweder fest vorgegeben sein oder beispielsweise im Rahmen der drei möglichen Zeitbasen lokal time, cycle time und global time veränderbar eben insbesondere vorgebbar aus mehreren Zeitbasen sein.

Somit wird durch den Gegenstand der Erfindung ein allgemeines Verfahren mit Vorrichtung und Bussystem beschrieben, wie eine Zeitbasis eines autonomen Protokollcontrollers, insbesondere eines TTCAN-Protokollcontrollers verwendet wird, um Zeiten zu messen, die auf das Netzwerk, insbesondere das TTCAN-Bussystem synchronisiert sind und die von dem Prozessor sowie von Software-Latenzzeiten unabhängig sind.

Damit ist ebenfalls eine auf das Netzwerk bzw. das Bussystem synchronisierte Zeitmessung mit einfachen Mitteln möglich.

So können in vernetzten Steuergeräten, beispielsweise in der Automatisierung, im Kraftfahrzeug oder an anderen Einsatzgebieten in einem oder mehreren Knoten bzw. Teilnehmern des Netzwerks Zeiten gemessen werden, die dann in der Einheit der Netzwerkzeit entsprechend der Zeitbasis vorliegen. Außerdem können Zeiten gemessen werden, die unabhängig sind von der Reaktionszeit, mit der die Software im Steuergerät auf ein Ereignis reagiert, welches einen zu messenden Zeitpunkt anzeigt.

Weitere Vorteile und vorteilhafte Ausgestaltungen sind Gegenstand der Beschreibung sowie der Patentansprüche.

### Zeichnung

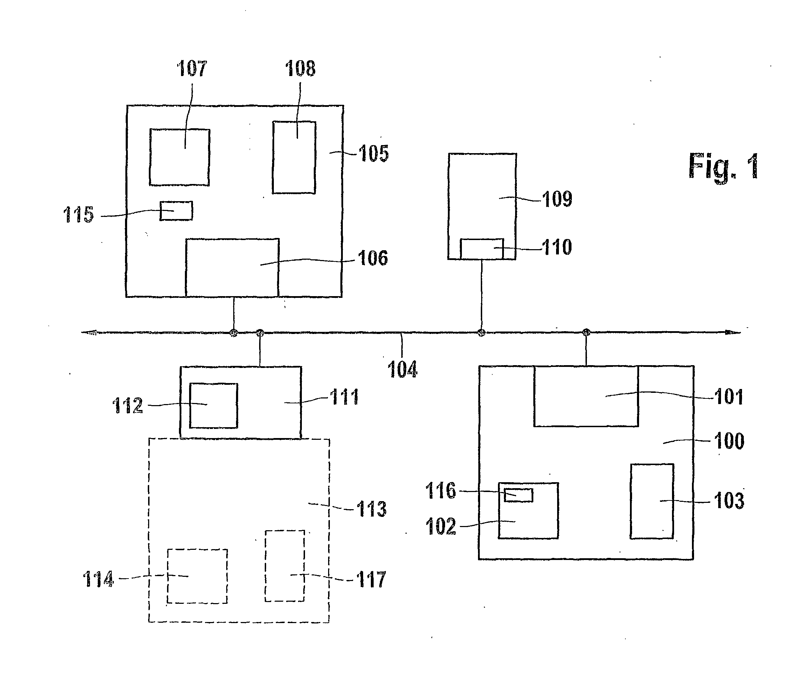

Die Erfindung wird im Weiteren anhand der in der Zeichnung dargestellten Figuren näher erläutert. Dabei zeigt Figur 1 eine Netzwerkumgebung bzw, ein Bussystem, insbesondere ein TTCAN-Netzwerk mit mehreren Teilnehmern.

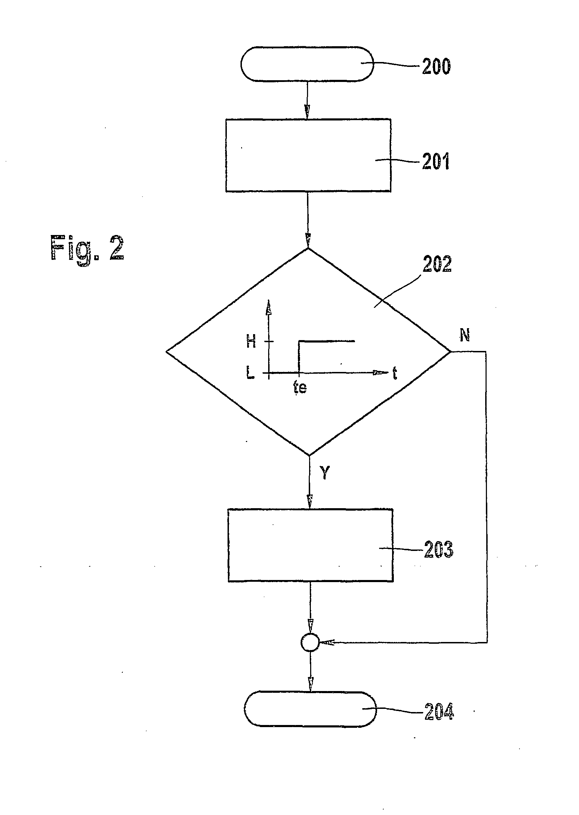

Figur 2 zeigt beispielhaft einen erfindungsgemäßen Verfahrensverlauf zur Zeitbestimmung anhand eines Flussdiagramms.

### Beschreibung der Ausführungsbeispiele

Im Folgenden wird anhand der Ausführungsbeispiele das Verfahren, die Vorrichtung und das Bussystem beschrieben im Rahmen dessen der Zeitpunkt, zu dem ein bestimmtes Ereignis auftritt, gemessen wird, und zwar bezogen auf die entsprechende Zeitbasis. Dabei erfolgt die Messung autonom ohne direkte Kontrolle durch den Prozessor.

Der Gegenstand der Erfindung beruht darauf, dass die Zeitbasis, die zur Messung verwendet werden soll, zu dem Zeitpunkt, der gemessen werden soll, in einen Speicher, insbesondere in ein Register kopiert wird. Das Ereignis, dessen Zeitpunkt gemessen werden soll, bewirkt dabei beispielsweise einen Signalwechsel an einem Eingangssignal eines Busteilnehmers insbesondere dem die Zeit messenden Teilnehmers, der den Kopiervorgang, also das Ablegen der Zeitbasis im Speicher, auslöst. Dabei zeigt Figur 1 eine Kommunikationsverbindung 104 mit wenigstens zwei Teilnehmern 105 und 100. Dabei ist der Teilnehmer 100 über einen Schnittstellenbaustein 101 mit der Kommunikationsverbindung 104 verbunden. Der Teilnehmer 100 kann dabei ein ganzes Steuergerät ebenso wie ein integrierter Schaltkreis zur Ankopplung an die Kommunikationsverbindung 104 sein, insbesondere ein Protokollcontroller. Neben dem Schnittstellenbaustein 101 ist beispielsweise eine verarbeitende Einheit, ein Prozessor 102 sowie eine Speichereinheit, insbesondere als Registerbank ausgeführt, 103 enthalten. Teilnehmer 105, der wie Teilnehmer 100 ein einfacher Baustein als integrierter Schaltkreis, eben insbesondere ein Protokollcontroller im TTCAN-Netzwerk oder aber ein Steuergerät bzw. eine Recheneinheit sein. Auch im IC 105 ist eine Schnittstelleneinheit bzw. ein Schnittstellenbaustein 106, eine verarbeitende Einheit, insbesondere ein Prozessor 107 sowie ein Speicher 108 enthalten. Die Zeitbasis der Teilnehmer 100 bzw. 105 wird durch einen optional synchronisierbaren Zeitgeber bestimmt. Dieser kann, wie Baustein 115, frei im Teilnehmer selbst enthalten sein oder in den Prozessor integriert, wie dies durch Baustein 116 und Prozessor 102 gezeigt ist. Ein solcher Zeitgeber 115 bzw. 116 gibt somit die lokale Zeit des jeweiligen Busteilnehmers 100 bzw. 105 vor. Wird beispielsweise Busteilnehmer 105 als Zeitmaster bestimmt, so gilt die lokale Zeit, vorgegeben durch den Zeitgeber 115, als globale Zeit oder global time für das gesamte Bussystem und wird beispielsweise durch Referenznachrichten an die anderen Busteilnehmer übertragen, so dass die lokale Zeit des Zeitmasters als globale Zeit in allen Busteilnehmern vorliegt.

Im speziellen Beispiel eines TTCAN-Systems basiert dieser im Wesentlichen auf einer zeitgesteuerten, periodischen Kommunikation, die durch einen Zeitgeber, eben den Teilnehmer mit der Masterzeitfunktion mit Hilfe einer Zeitreferenznachricht oder Referenznachricht getaktet wird. Die Periode bis zur nächsten Referenznachricht RN wird dann als Basiszyklus bezeichnet und beinhaltet eine Zykluszeit, die sogenannte cycle time. Dieser Basiszyklus unterteilt sich wiederum in N-Zeitfenster (N ∈ ∠), wobei jedes Zeitfenster das exklusive Senden einer periodischen Nachricht mit unterschiedlicher Länge erlaubt. Diese periodischen Nachrichten werden dann in einem TTCAN-Controller durch Verwendung von Zeitmarken, die dem Ablauf einer logischen relativen Zeit gekoppelt sind, gesendet.

TTCAN erlaubt aber auch die Berücksichtigung von freien Zeitfenstern, wobei diese Zeitfenster dann für sogenannte spontane Nachrichten im Rahmen einer Arbitrierung auf dem Bus genutzt werden wobei das Arbitrierungsschema entsprechend CAN (Controller Area Network) genutzt wird. Die Synchronisation der lokalen Zeit des Zeitmasters als globale Zeit mit den jeweils internen lokalen Zeiten der einzelnen Teilnehmern wird somit berücksichtigt und effizient umgesetzt. Somit sind im TTCAN-System systemimmanent drei Zeiten vorhanden: die globale Zeit, die lokale Zeit sowie die Zykluszeit. Auf Levelebene im TTCAN stehen somit auf Level 1 zwei Zeitbasen zur Auswahl: die lokale Zeit, lokal time sowie die Zykluszeit cycle time, und in Level 2 kommt dann noch die global time als globale Zeit hinzu. Dabei können alle drei Zeitbasen zur Messung eingesetzt werden.

Wie schon erwähnt beruht das Verfahren darauf, dass die Zeitbasis, die zur Messung verwendet werden soll, beispielsweise auswählbar aus lokal time, cycle time oder global time zu dem Zeitpunkt, der gemessen werden soll, in einen Speicher, insbesondere ein Register kopiert wird. Dazu können die Speicher 103 bzw. 108 ausführbar als Registerbänke verwendet werden oder es kann optional ein separat an den Bus über Schnittstelleneinheit 110 angekoppelter Speicher 109 als zentrales Speichermedium zur Zeitbestimmung eingesetzt werden.

Ebenfalls optional ist ein Schnittstellenbaustein 111 mit integrierter verarbeitender Einheit 112, der beispielsweise die Kommunikationsverbindung 104 mit einem Steuergerät 113 mit integriertem weiteren Prozessor 114 verbindet. Die Funktionalität der Zeitbestimmung kann in diesem speziellen Fall ebenfalls von der Schnittstelleneinheit 111 wahrgenommen werden, die die Zeitbasis entsprechend dem zu bestimmenden Ereignis bzw. Zeitpunkt entweder in einen internen Speicher des Steuergerätes 117 oder den zentralen Speicher 109 sowie einen nicht dargestellten möglichen schnittstelleninternen Speicher ablegen.

Die Speicher können dabei eine interne Strukur aufweisen, so dass mehrere Speicherbereiche bzw. mehrere Register verwendet werden, um parallel oder nacheinander mehrere Zeitpunkte zu bestimmen bzw. zu messen, so dass die entsprechende Zeitbasis gleichzeitig oder nacheinander in mehrere Speicherbereiche bzw. mehrere Register eingeschrieben wird, um die zu messenden bzw. die zu bestimmenden Zeitpunkte zu fixieren. Wird der Kopiervorgang durch ein Eingangssignal ausgelöst, so können auch mehrere Eingangssignale verwendet werden, um das Einschreiben der Zeitbasis, eben den Kopiervorgang auszulösen. Dabei kann ein solcher Kopiervorgang einerseits durch einen Signalwechsel von high nach low oder low nach high bei einem digitalen bzw. binären Signal oder bei Erreichen eines bestimmten vorgebbaren Signalpegels ausgelöst werden.

Dies kann einerseits durch Software erzielt werden oder beispielsweise mit Hilfe einer Komparatorschaltung. Ebenso kann die verwendete Zeitbasis beispielsweise eine der drei vorher genannten lokal time, cycle time oder global time, die entsprechend zur Messung verwendet wird, fest vorgegeben sein zur Zeitbestimmung im Bussystem oder die Zeitbasis kann ereignisabhängig bzw. signalabhängig eingesetzt werden. Ebenso kann die Zeitbasis ganz frei einstellbar sein entweder durch freie Wahl aus vorgegebenen Zeitbasen wie local time, cycle time oder global time.

Anhand Figur 2 soll noch einmal der konkrete Verfahrensablauf zur Zeitbestimmung dargestellt werden. Dabei erfolgt im Block 200 der Start des Verfahrens. Im Block 201 ist beispielsweise vorgebbar welche Netzwerkzeitbasis zur Zeitbestimmung genutzt werden soll oder welches Ereignis auf der Kommunikationsverbindung gemessen werden soll. Ein Ereignis kann dabei eine bestimmte Nachricht sein, die übertragen wird, ein Interrupt im System oder in einem Teilnehmer oder Ähnliches. Ebenso können im Block 201 bestimmte Bedingungen vorab, also vor Auslösen der Kopierfunktion bzw. des Speichervorgangs überprüft werden. Dies sind beispielsweise Bedingungen wie ein bestimmter Wert in einem Register. Dies kann beispielsweise ein Wert SWS in einem TT clock control register sein, der größer 0 sein muss und/oder ein Wert SWE beispielsweise in einem TT interrupt vector register der 0 sein muss, um dann den Block 202 beispielsweise anhand einer ansteigenden Flanke an einem Triggereingang die Basiszeit in ein entsprechendes Register abzulegen.

Dabei kann der Wert SWS dazu genutzt werden, die Basiszeit selbst zu bestimmen, so dass beispielsweise bei einem Wert W1 die cycle time abgespeichert wird, bei einem Wert W2 die local time oder bei einem Wert W3 die global time. Gleichzeitig kann ein Wert für SWS, beispielsweise Wert W0 z.B. 0 die Speicher- bzw. Messfunktion ausschalten.

Bei Verwendung nur eines Speichers oder Registers kann der Wert SWE dazu genutzt werden, festzustellen, ob eine Zeitmessung durchgeführt werden kann oder darf. Ist der Wert SWE = 0, wie in Block 201 überprüft, ist das Register frei und kann verwendet werden. Ist der Wert SWE = 1, hat gerade eine Messung stattgefunden und es kann damit verhindert werden, dass der Registerinhalt überschrieben wird. Die nächste Zeitmessung bzw. Zeitbestimmung ist somit erst möglich, wenn der Wert SWE wieder zu 0 gesetzt wird, was beispielsweise im Block 203 nach Messzeitauswertung geschieht.

In dem genannten Beispiel wird somit bei einem Signalwechsel von low nach high im Zeitpunkt TE des Ereignisses die durch den Wert SWS vorgewählte Basiszeit in ein Register abgelegt, sofern die genannten Voraussetzungen erfüllt sind. Wurde das mit der jeweiligen Zeit beschriebene Register in Block 203 ausgelesen, kann die nächste Zeitbestimmung durch Rücksetzen des Wertes SWE auf 0 ermöglicht werden und man gelangt im Anschluss zum Ende des Verfahrens bzw. zum Neustart im Block 200 zur nächsten Zeitmessung.

Um endlose Wartezeiten und Blockierungen des Registers zu vermeiden, kann auch nach Ablauf einer bestimmten Zeit oder anderer Abbruchbedingungen ohne Erzielung der steigenden Flanke sofort zum Verfahrensende im Block 204 übergegangen werden.

Ebenso wie die steigende Flanke kann auch eine fallende Flanke oder ein Erreichen eines bestimmten Signalpegels als Kriterium zur Abspeicherung gewählt werden. Die Wahlmöglichkeit durch den Wert SWS im Block 201, also welche Zeitbasis gewählt werden soll, ist optional. Ebenso kann eine bestimmte Zeitbasis generell zur Zeitmessung fest vorgegeben sein. Durch Verwendung verschiedener Werte für SWE kann auch ein Umschalten zwischen verschiedenen Registern ermöglicht werden. Dass beispielsweise ein leeres Register, in das eine Zeitbasis eingeschrieben werden kann, mit einem bestimmten Wert vorbelegt sein muss und ein anderer Wert das Umschalten auf ein anderes Register vorgibt.

So können nacheinander die Auftrittszeitpunkte verschiedener Ereignisse durch Einschreiben unterschiedlicher oder gleicher Zeitbasen in verschiedene Register bestimmt werden. Durch Verwendung mehrerer Register und Vergabe von Kennungen für einzelne Register könnten auch gleichzeitig auftretende Zeitpunkte unterschiedlicher Ereignisse gleichzeitig erfasst und damit die Zeitpunkte über die Zuordnung zu den entsprechenden Ereignissen bestimmt werden.

Somit kann vorteilhafter Weise exakt der Zeitpunkt gemessen werden, zu dem ein bestimmtes Eingangssignal bzw. Ereignis eines autonomen TTCAN protocol controllers wechselt. Die Genauigkeit der Messung ist nicht davon abhängig, wie schnell der Prozessor auf den Wechsel eines Eingangssignals reagieren kann und wie schnell der Prozessor die Zeitbasis des TTCAN protocol controllers auslesen kann. Die Messung kann auch auf die global time bezogen werden, die im TTCAN level 2 netzwerkweit automatisch kallibriert wird, und zwar unabhängig vom lokalen Prozessortakt. Damit ist insbesondere für den TTCAN, aber auch für andere im Rahmen des Erfindungsgegenstandes vergleichbaren Bussysteme eine einfache und effektive Möglichkeit gegeben, ohne zusätzliche Prozessorbelastung Zeiten im Bussytem zu bestimmen.

## Patentansprüche

1. Verfahren zur Zeitmessung in einem Bussystem mit wenigstens zwei Teilnehmern (100, 105, 111), welche über eine Kommunikationsverbindung (104) in Verbindung stehen, wobei wenigstens ein Teilnehmer (100,105,111) eine vorgebbare Basiszeit z.B. cycle time, global time, dann in wenigstens einen Speicher (109,103,108,117) ablegt, wenn ein Ereignis auf der Kommunikationsverbindung (104) oder an einem Triggereingang eines Teilnehmers auftritt, dessen Auftrittszeit gemessen werden soll, wobei die Basiszeit einer für das gesamte Bussystem gültigen Zeit z.B. cycle time, global time, entspricht und so die gemessensen Zeiten in einer Einheit einer Bussystemzeit vorliegen, so dass die Zeitmessung auf das gesamte Bussystem synchronisiert ist, **dadurch gekennzeichnet, dass** mehrere Basiszeiten zur Zeitmessung vorhanden sind, dass jede Basiszeit z.B. cycle time, global time, die im Rahmen einer Zeitmessung in einem Speicher (109,103,108,117) abgelegt wird auswählbar in dem Teilnehmer einem Ereignis zugeordnet ist und dass mehrere Basiszeiten in mehrere Speicher abgelegt werden können, um mehrere Zeiten von Ereignissen zu messern.

2. Verfahren nach Anspruch 1, **dadurch gekennzeichnet, dass** das Ereignis dessen Auftrittszeitpunkt gemessen wird einen Signalwechsel an einer Schnittstelle zur Kommunikationsverbindung (104) des wenigstens einen die Zeit bestimmenden Teilnehmers (100,105, 111) auslöst, wobei bei Auftreten des Signalwechsels
die vorgebbare Basiszeit z.B. cycle time, global time, im Speicher (109,103,108, 117) abgelegt wird.

3. Verfahren nach Anspruch 1 oder 2, **dadurch gekennzeichnet, dass** die Basiszeit z.B. cycle time, global time, dann in wenigstens einem Speicher (109, 103, 108, 117) abgelegt wird, wenn als Ereignis dessen Auftrittszeit gemessen werden soll eine Flanke eines Signals an dem Triggereingang eines Teilnehmers (100,105, 111) auftritt.

4. Verfahren nach Anspruch 1, **dadurch gekennzeichnet, dass** es sich bei dem Bussystem um ein TTCAN-System handelt.

5. Verfahren nach Anspruch 1, **dadurch gekennzeichnet, dass** über die Kommunikationsverbindung (104) Nachrichten derart übertragen werden, dass eine Referenznachricht eines Teilnehmers (100,105, 111) in einem vorgebbaren zeitlichen Abstand als Zykluszeit z.B cycle time, übertragen wird und der zeitliche Abstand in Zeitfenster vorgebbarer Länge unterteilt wird in denen die Nachrichten übertragen werden, wobei die Basiszeit der Zykluszeit z.B cycle time, entspricht.

6. Verfahren nach Anspruch 1, **dadurch gekennzeichnet, dass** jede Basiszeit, die in einem Speicher (109, 103, 108,117) abgelegt wird einem Ereignis zugeordnet ist und dass nacheinander mehrere Basiszeiten in mehrere Speicher abgelegt werden, um mehrere Zeiten von Ereignissen und/oder eines Ereignisses nacheinander zu messen.

7. Verfahren nach Anspruch 1, **dadurch gekennzeichnet, dass** jede Basiszeit z.B cycle time, global time die in einem Speicher (109,103, 108, 117) abgelegt wird einem Ereignis zugeordnet ist und dass gleichzeitig mehrere Basiszeiten in mehrere Speicher abgelegt werden können, um mehrere Zeiten von Ereignissen gleichzeitig zu messen.

8. Verfahren nach Anspruch 1, **dadurch gekennzeichnet, dass** das Ereignis dessen Auftrittszeitpunkt gemessen wird einen vorgebbaren Signalpegel an einer Schnittstelle zur Kommunikationsverbindung (104) des wenigstens einen die Zeit bestimmenden Teilnehmers (105) zur Folge hat, wobei bei auftreten des vorgebbaren Signalpegels die vorgebbare Basiszeit z.B cycle time, global time im Speicher abgelegt wird.

9. Verfahren nach Anspruch 2 oder 8, **dadurch gekennzeichnet, dass** wenigstens ein Ereignis ein Eingangssignal bei wenigstens einem eine Zeit messenden Teilnehmer (105) bewirkt und dass das Ablegen der Basiszeit im Speicher durch ein oder mehrere Eingangssignale ausgelöst werden kann.

10. Verfahren nach Anspruch 1, dadurch gekenntzeichnet, dass die Basiszeit zur Zeitmessung für das Bussystem fest vorgegeben oder veränderbar, insbesondere vorgebbar aus mehreren Zeitbasen, ist.

11. Vorrichtung, insbesondere ein integrierter Schaltkreis, zur Zeitmessung in einem Bussystem, welches aus wenigstens zwei Teilnehmern (100, 105, 111), besteht, welche über eine Kommunikationsverbindung (104) in Verbindung stehen, wobei erste Mittel zur Erkennung eines Ereignisse enthalten sind, dessen Auftrittszeit gemessen werden soll und dass wenigstens ein Speicher (109, 103, 108, 117) vorgesehen ist, in den wenigstens eine vorgebbare Basiszeit dann durch zweite Mittel abgelegt wird; wenn ein Ereignis auf der Kommunikationsverbindung (104) oder an einem Triggereingang eines Teilnehmers auftritt, dessen Auftrittszeit gemessen werden soll, wobei die Basiszeit einer für das gesamte Bussystem gültigen Zeit z.B. cycle time, global time, entspricht und so die gemessenen Zeiten in einer Einheit einer Bussystemzeit vorliegen, so dass die Zeitmessung auf das gesamte Bussystem synchronisiert ist, **dadurch gekennzeichnet, dass** jede Basiszeit im Rahmen einer Zeitmessung z.B. cycle time, global time, die in einem Speicher (109, 103,108, 117) abgelegt wird, einem Ereignis zugeordnet ist und dass mehrere Basiszeiten in mehrere Speicher abgelegt werden können, um mehrere Zeiten von Ereignissen zu messen.

12. Bussystem mit einer Vorrichtung nach Anspruch 11.

## Claims

1. Method for time measurement in a bus system having at least two subscribers (100, 105, 111) that are connected by means of a communication link (104), wherein at least one subscriber (100, 105, 111) stores a prescribable base time, e.g. cycle time, global time, in at least one memory (109, 103, 108, 117) when an event occurs on the communication link (104) or at a trigger input of a subscriber for which it is necessary to measure the time of occurrence, wherein the base time corresponds to a time, e.g. cycle time, global time, that is valid for the whole bus system and thus the measured times are present in a unit of a bus system time, with the result that the time measurement is synchronized to the whole bus system, **characterized in that** a plurality of base times are available for the time measurement, **in that** each base time, e.g. cycle time, global time, that is stored in a memory (109, 103, 108, 117) in the course of a time measurement is associated with an event in selectable form in the subscriber and **in that** a plurality of base times can be stored in a plurality of memories in order to measure a plurality of times of events.

2. Method according to Claim 1, **characterized in that** the event for which the type of occurrence is measured triggers a signal change at an interface to the communication link (104) of the at least one subscriber (100, 105, 111) determining the time, wherein the occurrence of the signal change prompts the prescribable base time, e.g. cycle time, global time, to be stored in the memory (109, 103, 108, 117).

3. Method according to Claim 1 or 2, **characterized in that** the base time, e.g. cycle time, global time, is stored in at least one memory (109, 103, 108, 117) when the event that occurs for which the time of occurrence needs to be measured is an edge of a signal at the trigger input of a subscriber (100, 105, 111).

4. Method according to Claim 1, **characterized in that** the bus system is a TTCAN system.

5. Method according to Claim 1, **characterized in that** the communication link (104) is used to transmit messages such that a reference message from a subscriber (100, 105, 111) is transmitted at a prescribable interval of time as a cycle time, e.g. cycle time, and the interval of time is divided into time windows of prescribable length in which the messages are transmitted, wherein the base time corresponds to the cycle time, e.g. cycle time.

6. Method according to Claim 1, **characterized in that** each base time that is stored in a memory (109, 103, 108, 117) is associated with an event and **in that** a plurality of base times are successively stored in a plurality of memories in order to successively measure a plurality of times of events and/or of an event.

7. Method according to Claim 1, **characterized in that** each base time, e.g. cycle time, global time, that is stored in a memory (109, 103, 108, 117) is associated with an event and **in that** a plurality of base times can be simultaneously stored in a plurality of memories in order to simultaneously measure a plurality of times of events.

8. Method according to Claim 1, **characterized in that** the event for which the time of occurrence is measured results in a prescribable signal level at an interface to the communication link (104) of the at least one subscriber (105) determining the time, wherein the occurrence of the prescribable signal level prompts the prescribable base time, e.g. cycle time, global time, to be stored in the memory.

9. Method according to Claim 2 or 8, **characterized in that** at least one event prompts an input signal for at least one subscriber (105) measuring a time and **in that** the storage of the base time in the memory can be triggered by one or more input signals.

10. Method according to Claim 1, **characterized in that** the base time for time measurement is firmly prescribed for the bus system or alterable, particularly prescribable from a plurality of time bases.

11. Apparatus, particularly an integrated circuit, for time measurement in a bus system that comprises at least two subscribers (100, 105, 111) that are connected by means of a communication link (104), wherein first means are included for identifying an event for which the time of occurrence needs to be measured and wherein at least one memory (109, 103, 108, 117) is provided in which at least one prescribable base time is stored by second means when an event occurs on the communication link (104) or at a trigger input of a subscriber for which the time of occurrence needs to be measured, wherein the base time corresponds to a time, e.g. cycle time, global time, that is valid for the whole bus system and thus the measured times are present in a unit of a bus system time, with the result that the time measurement is synchronized to the whole bus system, **characterized in that** each base time in the course of a time measurement, e.g. cycle time, global time, that is stored in a memory (109, 103, 108, 117) is associated with an event and **in that** a plurality of base times can be stored in a plurality of memories in order to measure a plurality of times of events.

12. Bus system having an apparatus according to Claim 11.

## Revendications

1. Procédé de mesure du temps dans un système de bus qui présente au moins deux participants (100, 105, 111) qui communiquent par une liaison de communication (104), dans lequel au moins un participant (100, 105, 111) déposant une base temporelle prédéterminée, par exemple une durée de cycle ou une durée globale ("cycle time, global time") dans au moins une mémoire (109, 103, 108, 117) lorsqu'un événement dont l'instant de survenance doit être mesuré survient sur la liaison de communication (104) ou sur une entrée de gâchette d'un participant,
la base de temps correspondant à un temps valide pour l'ensemble du système de bus et les instants ainsi mesurés étant prévus dans une unité de temps du système de bus de telle sorte que la mesure du temps soit synchronisée pour l'ensemble du système de bus, **caractérisé en ce que**
plusieurs temps de base sont prévus pour la mesure du temps,
**en ce que** chaque temps de base, par exemple le temps d'un cycle ou un temps global ("cycle time, global time"), déposé dans une mémoire (109, 103, 108, 117) dans le cadre d'une mesure du temps est associé à un événement et
**en ce que** pour mesurer les instants de plusieurs événements, plusieurs temps de base peuvent être déposés de manière sélectionnée par le participant dans plusieurs mémoires.

2. Procédé selon la revendication 1, **caractérisé en ce que** l'événement dont l'instant de survenance est mesuré déclenche un échange de signaux sur une interface avec la liaison de communication (104) du ou des participants (100, 105, 111) qui déterminent le temps, la base de temps prédéterminée, par exemple la durée d'un cycle ou la durée globale ("cycle time, global time"), étant déposée dans la mémoire (109, 103, 108, 117) lorsque l'échange de signaux survient.

3. Procédé selon les revendications 1 ou 2, **caractérisé en ce que** le temps de base, par exemple la durée d'un cycle ou le temps global ("cycle time, global time"), est déposé dans au moins une mémoire (109, 103, 108, 117) si l'événement dont l'instant de survenance doit être mesuré est que le flanc d'un signal survient sur l'entrée de gâchette d'un participant (100, 105, 111).

4. Procédé selon la revendication 1, **caractérisé en ce que** le système de bus est un système TTCAN.

5. Procédé selon la revendication 1, **caractérisé en ce que** des messages sont transmis par la liaison de communication (104) de telle sorte qu'un message de référence d'un participant (100, 105, 111) est transmis à une distance temporelle prédéterminée en tant que temps de cycle, par exemple "cycle time", et **en ce que** la distance temporelle est divisée en fenêtres temporelles de longueur prédéterminée dans lesquelles les messages sont transmis, le temps de base correspondant au temps de cycle, par exemple "cycle time".

6. Procédé selon la revendication 1, **caractérisé en ce que** chaque temps de base déposé dans une mémoire (109, 103, 108, 117) est associé à un événement et **en ce que** plusieurs temps de base sont déposés successivement dans plusieurs mémoires pour mesurer successivement plusieurs instants d'événement et/ou d'un événement.

7. Procédé selon la revendication 1, **caractérisé en ce que** chaque temps de base, par exemple "cycle time, global time", qui est déposé dans une mémoire (109, 103, 108, 117) est associé à un événement et **en ce que** plusieurs temps de base peuvent être déposés simultanément dans plusieurs mémoires pour pouvoir mesurer simultanément l'instant de plusieurs événements.

8. Procédé selon la revendication 1, **caractérisé en ce que** l'événement dont l'instant de survenance doit être mesuré a pour conséquence un niveau prédéterminé du signal sur une interface avec la liaison de communication (104) du ou des participants (105) qui déterminent le temps, la base de temps prédéterminée, par exemple temps de cycle, temps global ("cycle time, global time"), étant déposée dans la mémoire lorsque le niveau de signal prédéterminé survient.

9. Procédé selon les revendications 2 ou 8, **caractérisé en ce qu'**au moins une événement a pour effet un signal d'entrée sur au moins un participant (105) qui mesure le temps et **en ce que** le placement du temps de base dans la mémoire peut être déclenché par un ou plusieurs signaux d'entrée.

10. Procédé selon la revendication 1, **caractérisé en ce que** le temps de base destiné à mesurer le temps du système de bus est constitué de plusieurs bases de temps prédéterminées fixement ou modifiables, en particulier de manière prédéterminée.

11. Dispositif, en particulier circuit intégré, de mesure du temps dans un système de bus constitué d'au moins deux participants (100, 105, 111) qui communiquent par une liaison de communication (104),
le dispositif présentant des premiers moyens de détection d'un événement dont le temps de survenance doit être mesuré et
au moins une mémoire (109, 103, 108, 117) étant prévue dans laquelle au moins un temps de base prédéterminé est déposé par des deuxièmes moyens lorsqu'un événement dont l'instant de survenance doit être mesuré survient sur la liaison de communication (104) ou sur une entrée de gâchette d'un participant,
la base de temps correspondant à un temps valide, par exemple "cycle time, global time", pour l'ensemble du système de bus et les instants ainsi mesurés étant prévus dans une unité de temps du système de bus de telle sorte que la mesure du temps soit synchronisée pour l'ensemble du système de bus, **caractérisé en ce que**
chaque temps de base, par exemple le temps d'un cycle ou un temps global ("cycle time, global time"), déposé dans une mémoire (109, 103, 108, 117) dans le cadre d'une mesure du temps est associé à un événement et
**en ce que** pour mesurer les instants de plusieurs événements, plusieurs temps de base peuvent être déposés de manière sélectionnée par le participant dans plusieurs mémoires.

12. Système de bus doté d'un dispositif selon la revendication 11.
